Europäisches Patentamt

European Patent Office

Office européen des brevets

(11) Veröffentlichungsnummer: **0 163 358 B1**

(12) **EUROPÄISCHE PATENTSCHRIFT**

(45) Veröffentlichungstag der Patentschrift: 22.05.91

(51) Int. Cl.⁵: **H04Q 7/04**

(21) Anmeldenummer: 85200857.2

(22) Anmeldetag: 29.05.85

(54) Verfahren zum Erkennen der unerlaubten Benutzung einer, einer beweglichen Funkstation zugeordneten Identifizierung in einem Funkübertragungssystem.

(30) Priorität: 01.06.84 DE 3420460

(43) Veröffentlichungstag der Anmeldung:
04.12.85 Patentblatt 85/49

(45) Bekanntmachung des Hinweises auf die Patenterteilung:
22.05.91 Patentblatt 91/21

(84) Benannte Vertragsstaaten:
AT CH DE FR GB LI SE

(56) Entgegenhaltungen:
DE-A- 2 419 615
DE-A- 3 410 936

PATENT ABSTRACTS OF JAPAN, Band 5, Nr. 181 (E-83)[853], 20. November 1981; & JP-A-56 109 051 (NIPPON DENSHIN DENWA KOSHA) 29-08-1981

(73) Patentinhaber: **Philips Patentverwaltung GmbH**
**Wendenstrasse 35 Postfach 10 51 49**
**W-2000 Hamburg 1(DE)DE**

Patentinhaber: **N.V. Philips' Gloeilampenfabrieken**
**Groenewoudseweg 1**
**NL-5621 BA Eindhoven(NL)CH FR GB LI SE AT**

(72) Erfinder: **Dreykorn-Lindner, Werner, Dipl.-Ing.**
**Bayreuther Strasse 16**
**W-8500 Nürnberg 20(DE)**
Erfinder: **Scheinert, Stefan, Dipl.-Ing.**
**Blütenstrasse 37**
**W-8501 Eckental(DE)**

(74) Vertreter: **Peuckert, Hermann, Dipl.-Ing. et al**
**Philips Patentverwaltung GmbH Wendenstrasse 35 Postfach 10 51 49**
**W-2000 Hamburg 1(DE)**

## Beschreibung

Die Erfindung betrifft ein Verfahren zum Erkennen der unerlaubten Benutzung einer, einer beweglichen Funkstation zugeordneten Identifizierung in einem Funkübertragungssystem gemäß dem Oberbegriff des Patentanspruchs 1.

Bei Funkübertragungssystemen erfolgt die Gebührenerfassung für Gespräche, welche durch eine bewegliche Funkstation eingeleitet werden, in einer Funkvermittlungsstelle. Für alle Inlandsgespräche ist ein einheitlicher Gebührentakt zugrunde gelegt und für Auslandsgespräche gelten die Gebührentakte des Auslands-Selbstwählferndienstes. Zusätzlich zu diesen Gesprächsgebühren wird ein Zuschlag für die Benutzung des Funkübertragungskanals erhoben.

Die Daten aller erfolgreichen und versuchten Gespräche werden beispielsweise in der Funkvermittlungsstelle auf Magnetband erfaßt. Gespeichert werden neben anderen statistischen Angaben die Daten der den Verbindungsaufbau vornehmenden Funkvermittlungseinrichtung, die Uhrzeit, die Gesprächsgebühren,die Kennung der beweglichen Funkstation, die gewählte Teilnehmernummer - z.B. Rufnummer einer Teilnehmerstation des öffentichen Fernsprechnetzes - bei der Verkehrsrichtung mobil-ortsfest, die Gründe für das nicht Zustandekommen von Verbindungen und die Kanalnummer des Funkübertragungskanals.

Aus der DE-A 24 19 615 ist ein Verfahren zur Identifizierung einer Teilnehmerstation (bewegliche Funkstation) bekannt, mittels dem die unerlaubte Benutzung der Identifizierung (Teilnehmernummer und Kennung) der beweglichen Funkstation im Funkübertragungssystem erkannt werden kann. In der beweglichen Funkstation ist u.a. ein Kennungsspeicher vorgesehen. Als Kennungsspeicher kann beispielsweise eine Magnetkarte verwendet werden, welche die Form einer Scheckkarte hat und die notwendigen Daten auf einem Magnetstreifen enthält. Um die bewegliche Funkstation zu betreiben, wird der Kennungsspeicher in einen Schlitz des Bediengeräts der beweglichen Funkstation eingeschoben und die Daten werden von einer Leseeinrichtung des Bediengeräts ausgelesen und einer Steuereinrichtung im Bediengerät zugeführt. Zur Vermeidung von Nachahmungen der Magnetkarten nach Angaben aus dem Fernsprechbuch ist jedem Teilnehmer des Funkübertragungssystems eine zweite "stille" Teilnehmernummer (Kennung) auf der Magnetkarte zugeteilt.

Zur Identitätsprüfung wird die Übereinstimmung von Rückkennung und Teilnehmernummer geprüft. Dabei wird die von einer beweglichen Funkstation zur Prüfung ihrer Identität ausgesandte Kennung, welche mittels eines dem Teilnehmer nicht bekannten Codes aus der Teilnehmernummer gebildet wird, zur Funkvermittlungsstelle übertragen. In der Funkvermittlungsstelle wird die von der beweglichen Teilnehmerstation erhaltene Kennung mittels des inversen Codes entschlüsselt. Durch die Entschlüsselung entsteht als Rückkennung die Rufnummer (Teilnehmernummer) der betreffenden beweglichen Funkstation.

Manipulierte Kennung, z.B. Kennungen die ohne Anwendung der dem Teilnehmer nicht bekannten Schlüsselregel gebildet worden sind, werden in der Funkvermittlungsstelle zwar ebenfalls entschlüsselt und als Rückkennung zur beweglichen Funkstation übertragen. Die so entstandene Rückkennung entspricht jedoch nicht derjenigen, die mit der Teilnehmernummer der beweglichen Funkstation identisch ist. Die in der beweglichen Funkstation empfangene Rückkennung wird mit der - beispielsweise auf der Magnetkarte befindlichen - Teilnehmernummer verglichen und beim Feststellen keiner Übereinstimmung im Rückkennungsempfänger wird in der beweglichen Funkstation die aufgebaute Funkverbindung ausgelöst.

Ein solches Verfahren, bei dem eine feste Schlüsselregel verwendet wird, bietet jedoch kaum Schutz bei manipulierten Kennungen, welche durch Kopieren des Kennungsgebers der beweglichen Funkstation oder durch Mithören des Informationsaustausches auf dem Funkübertragungskanal unerlaubt beschafft werden. Wird der Informationsaustausch auf dem Funkübertragungskanal abgehört, so kann durch Manipulation des Kennungsgebers, d.h. beispielsweise der Magnetkarte, oder einer gespeicherten Identifizierung und durch Manipulation des Rückkennungsempfängers in der beweglichen Funkstation die bewegliche Funkstation mit einer fremden Kennung (Identifizierung) betrieben werden und die für diese bewegliche Funkstation aufgelaufenen Gesprächsgebühren werden einem anderen Teilnehmer des Funkübertragungssystems angelastet.

Der Erfindung liegt die Aufgabe zugrunde, ein aus der DE-A 24 19 615 bekanntes Verfahren derartig weiterzubilden, daß nicht durch manipulierte Identifizierungen, welche durch Kopieren des Speichers der beweglichen Funkstation oder durch Mithören des Informationsaustausches auf dem Funkübertragungskanal unerlaubt beschafft werden können, Gesprächsgebühren anderen Teilnehmern des Funkübertragungssystems angelastet werden.

Die Lösung dieser Aufgabe geht aus der Fassung des Patentanspruchs 1 hervor.

Manipulierte Identifizierungen können durch Kopieren der gespeicherten festen Daten oder durch Mithören des Informationsaustausches auf dem Funkübertragungskanal unerlaubt beschafft werden. Im ersten Fall kann dadurch, daß feste Daten, wie Teilnehmernummer und Kennung, mit veränderbaren Daten verknüpft werden, im Funkübertragungssystem die unerlaubte Benutzung der festen Daten einer beweglichen Funkstation erkannt werden. Sind die gespeicherten festen Daten kopiert worden, so kann der Manipulant keine Gespräche auf Kosten eines anderen Teilnehmers führen, denn er kennt nicht die gespeicherten veränderbaren Daten.

Erst durch Kopieren der gespeicherten festen Daten und Abhören der veränderbaren Daten könnte ein Manipulant Gespräche auf Kosten des anderen Teilnehmers des Funkübertragungssystems führen. Die veränderbaren Daten ändern sich jedoch beim Betrieb der beiden beweglichen Funkstationen, so daß unter Umständen beim ersten Gespräch eine solche Manipulation nicht erkannt werden kann. Bei weiterem Betrieb der beiden beweglichen Funkstationen stellen sich ungleiche, veränderbare Daten ein, welche zu unterschiedlichen Vergleichsergebnissen in der Funkvermittlungsstelle führen. Über einen längeren Zeitraum hinweg betrachtet kann der Manipulant keine Gespräche führen, ohne daß diese Manipulation nicht erkannt werden kann.

In der Mehrzahl der Fälle werden manipulierte Kennungen durch Mithören des Informationsaustausches auf dem Funkübertragungskanal unerlaubt beschafft (zweiter Fall). Dadurch, daß feste, vom Systemablauf abhängige Daten verwendet werden, muß der Manipulant über einen langen Zeitraum hinweg den Informationsaustausch auf dem Funkübertragungskanal mithören, um die verschiedenen, den verschiedenen Funkmeldungen (oder Zugriffen) zugeordneten festen Daten überhaupt aufzeichnen zu können.

Bei einem Verfahren gemäß Patentanspruch 2 wird die bewegliche Funkstation nur im Falle der Ungleichheit der veränderbaren Daten zur Abgabe von zweiten in der beweglichen Funkstation gespeicherten festen Daten (z.B. Kennung) aufgefordert. Die ersten und zweiten Daten können beliebig vereinbart werden. Der Manipulant kann durch Abhören die sonst nicht gesendete zweite Kennung der berechtigtenbeweglichen Funkstation nicht kennen, so daß die Überprüfung in der Funkvermittlungsstelle der zweiten Kennung mit der vom Manipulant ausgesandten Kennung zu einer Alarmmeldung führt.

Hat der Manipulant durch Kopieren des Speichers sich die festen Daten beschafft, so treten beim nachfolgenden Betrieb der beweglichen Funkstation unterschiedliche veränderbare Daten bei beiden beweglichen Funkstationen auf. Gemäß Patentanspruch 3 werden im Falle der Ungleichheit der veränderbaren Daten die von den beweglichen Funkstationen angewählten Teilnehmernummern gespeichert. Durch Rückfrage bei diesen Teilnehmern kann auf einfache Art und Weise der Manipulant ausfindig gemacht werden.

Werden gemäß Patentanspruch 4 als veränderbare Daten die Zahl von erfolgreichen Zugriffen der beweglichen Funkstation (Einbuchen, Abbuchen, Ummelden, Wahlübertragung) verwendet, so kann der Vergleichs-und Auswertevorgang in der Funkvermittlungsstelle auf einfache Art und Weise vereinfacht werden. Mit jedem erfolgreichen Zugriff werden ein in der beweglichen Funkstation angeordneter Zähler sowie ein in der Funkvermittlungsstelle ein dieser beweglichen Funkstation zugeordneter Zähler im Zählerstand beispielsweise um eins erhöht. Der Vergleich der veränderbaren Daten ist auf einfache Art und Weise durchzuführen.

Eine weitere Vereinfachung wird erreicht, wenn gemäß Patentanspruch 5 nur ein Teil des Zählerstands beim Verbindungsaufbau von der beweglichen Funkstation gesendet wird. Im Falle der Ungleichheitdieser Teile wird zusammen mit anderen festen Daten der gesamte Zählerstand des Zählers in der beweglichen Funkstation zur Funkvermittlungsstelle übertragen und der dort befindliche Zähler auf diesen Zählerstand gesetzt, so daß eine kurzzeitige Störung sich bei weiterem Betrieb der beweglichen Funkstation nicht auswirkt.

Für die Systemabläufe gibt es nur eine bestimmte Zahl von verschiedenen Funkmeldungen. Dadurch, daß es ausreichend ist die Zahl von verschiedenen jeder beweglichen Funkstation zugeordneten festen Daten höchstens gleich der Zahl aller verschiedenen Funkmeldungen zu wählen, kann die Datenmenge der festen Daten beschränkt werden (Patentanspruch 11). Die Zuordnung zwischen Funkmeldung und festen Daten kann fest oder variabel sein (Patentanspruch 12, 13). Bei variabler Zuordnung ist es für einen Manipulanten, auch wenn er den Informationsaustausch auf dem Funkübertragungskanal über lange Zeit mithört, praktisch kaum möglich die Zuordnungsvorschrift zu erkennen, wenn nach jedem erfolgreichen Zugriff eine andere Zuordnung verwendet wird (Patentanspruch 13). Solche Zuordnungsvorschriften können auf einfache Art und Weise festgelegt werden, indem ausgehend vom ersten Zugriff während eines Systemablaufs (Zugriff "Einbuchen") nach jedem erfolgreichen Zugriff der weitere Zugriff mit anderen festen Daten, beispielsweise den nächsten im Speicher abgelegten Daten, erfolgt.

Die Erfindung wird nachstehend anhand der in der Zeichnung dargestellten Ausführungsform näher beschrieben und erläutert. Es zeigt:

Fig. 1
das Blockschaltbild eines Funkübertragungssystems und

Fig. 2a und 2b
die Zuordnung von Funkmeldung bzw. Zugriff und festen Daten gemäß der Erfindung.

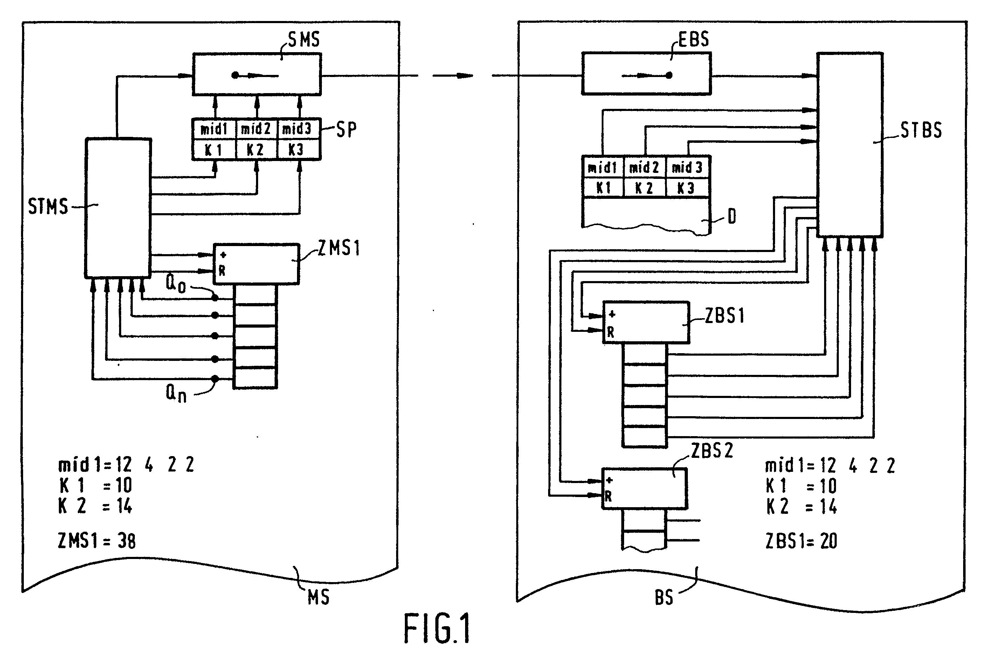

Fig. 1 zeigt die beim Verfahren gemäß der Erfindung verwendeten Einrichtungen einer beweglichen Funkstation MS und einer Funkvermittlungsstelle BS.

Die Funkvermittlungsstellen BS sind bei einem Funkübertragungssystem häufig räumlich nach einem Zellensystem angeordnet. Jeder Funkvermittlungsstelle sind eine Anzahl von Duplex-Übertragungskanälen, auch Funkkanal genannt, zugeordnet. Von diesen wird mindestens ein Kanal, der Dienstkanal, für Signalisierung zur Steuerung der Systemfunktionen verwendet. Dazu gehört z.B. die Übertragung von Wahlinformationen beim Aufbau von Gesprächen von und zu den beweglichen Funkstationen sowie von Aufenthaltsmeldungen der beweglichen Funkstationen zur Mitteilung ihrer Erreichbarkeit. Jeder Dienstkanal kann in jede Übertragungsrichtung in eine Folge von gleichlangen Zeitschlitzen unterteilt sein. Jedem Zeitschlitz in Rückrichtung, d.h. von der Funkvermittlungsstelle BS zur beweglichen Funkstation MS ist ein späterer Zeitschlitz in Hinrichtung, d.h. von der beweglichen Funkstation MS zur Funkvermittlungsstelle BS zugeordnet. Die Funkvermittlungsstelle BS sendet in der Rückrichtung kontinuierlich Meldungen mit fester Zeitdauer aus, wobei die Zeitdauer der Zeitdauer eines Zeitschlitzes entspricht. Diese Meldungen enthalten Markierungen, die über den Verwendungszweck des der beweglichen Funkstation MS zugeordneten Zeitschlitzes der Hinrichtung Auskunft geben.

Will eine bewegliche Funkstation MS auf den Dienstkanal zugreifen und soll ein Gesprächsaufbau durchgeführt werden, so fordert die Funkmittlungsstelle mittels einer Identifizierungsaufforderung die bewegliche Funkstation MS zur Identifizierung und Übertragung der Wahlinformation auf. Zur Identifizierung der beweglichen Funkstation werden beim Verbindungsaufbau die in der beweglichen Funkstation MS in einem Speicher SP gespeicherten festen Daten, z.B. erste Teilnehmernummer mid 1 und erste Kennung K1, der beweglichen Funkstation MS zur Funkvermittlungsstelle BS übertragen. In der beweglichen Funkstation MS ist eine Steuerung STMS angeordnet, welche unter anderem den Speicher SP ausliest und mittels eines Senders SMS die gespeicherten festen Daten sendet. In Funkübertragungssystemen wird häufig festgelegt, daß, in der Richtung von Funkvermittlungsstelle BS zur beweglichen Funkstation MS, die der beweglichen Funkstation MS zugeordnete Kennung K nicht gesendet wird.

Die gesendeten festen Daten werden von einem in der Funkvermittlungsstelle BS angeordneten Empfänger EBS empfangen und einer zentralen Steuerung STBS zugeführt. In der ortsfesten Funkstation werden mittels der Steuerung STBS die dort in einer Datei D gespeicherten festen Daten mit den empfangenen festen Daten verglichen und ausgewertet. Beim aus der DT-PS 24 19 615 bekannten Verfahren wird bei Gleichheit der festen Daten von der Funkvermittlungsstelle BS eine Wahlquittung zur beweglichen Funkstation MS übertragen und der Verbindungsaufbau durchgeführt, wobei die Funkvermittlungsstelle mittels eines Kanalbefehls der beweglichen Funkstation MS einen für das Gespräch vorgesehenen Sprechkanal zuweist.

Beim erfindungsgemäßen Verfahren werden in der beweglichen Funkstation MS zusätzliche, beim Betrieb der beweglichen Funkstation MS sich verändernde Daten gespeichert. Bei der in Fig. 1 dargestellten Ausführungsform werden als veränderbare Daten die Zahl von erfolgreichen Zugriffen der beweglichen Funkstation MS verwendet. Ein in der beweglichen Funkstation MS angeordneter Zähler ZMS1 wird im Zählerstand bei jedem erfolgreichen Zugriff beispielsweise um eins erhöht. Der an den Ausgängen $Q_0$ bis $Q_n$ abgreifbare Zählerstand wird von der Steuerung STMS abgefragt und über den Sender SMS zur Funkvermittlungsstelle BS übertragen.

In der Funkvermittlungsstelle BS ist ein dieser beweglichen Funkstation MS zugeordneter Zähler ZBS1 angeordnet. Bei jedem erfolgreichen Zugriff dieser beweglichen Funkstation MS wird mittels der zentralen Steuerung STBS der Zählerstand des Zählers ZBS1 beispielsweise um eins erhöht. Die Erhöhung der Zählerstände der Zähler ZMS 1 und ZBS 1 kann auch mit linear ansteigenden Schrittweiten erfolgen, wobei dann die zuletzt verwendende Schrittweite in der beweglichen Funktion MS bzw. der Funkvermittlungsstelle BS bekannt sein muß. Die Erhöhung der Schrittweite kann zyklisch ablaufen, wobei dann für die Bestimmung der augenblicklich aktuellen Schrittweite ein Zähler verwendet werden kann.

Zum Gesprächsaufbau wird gesteuert von der Steuerung STMS eine Identifizierung, bestehend aus festen Daten, wie beispielsweise die Teilnehmernummer mid und Kennung K und veränderbare Daten, der Zählerstand des Zählers ZSM1, zur Funkvermittlungsstelle BS übertragen und mit den dort in einer Datei D gespeicherten festen Daten, Teilnehmernummer mid und Kennung K, sowie mit dem Zählerstand des Zählers ZBS1 verglichen.

Die bewegliche Funkstation MS kann beispielsweise als veränderbare Daten nur einen Teil des Zählerstands senden, welcher durch Auswahl bestimmter Bitstellen des Zählerstands oder durch Verknüpfung des Zählerstands mit einem Schlüssel (beispielsweise EXOR-Verknüpfung) entsteht. Hört ein Manipulant den Informationsaustausch auf dem Funkübertragungskanal ab, so kennt er nur einen Teil nicht jedoch den gesamten Zählerstand. Der Manipulant kann deshalb nur den gesamten Zählerstand zu raten versuchen, so daß in der Regel bereits der erste Versuch des Manipulanten erkannt werden kann.

Stimmen die von der beweglichen Funkstation MS gesendeten festen Daten, Teilnehmernummer mid und Kennung K, nicht mit den in der Datei D gespeicherten festen Daten, Teilnehmernummer mid und Kennung K, überein, so wird von der Funkvermittlungsstelle BS die Meldung der beweglichen Funkstation MS ignoriert.

Sind Teilnehmernummer mid, Kennung K und veränderbare Daten beispielsweise der Zählerstand einander gleich, so erfolgt der Verbindungsaufbau.

Weisen die Zähler ZMS1 znd ZBS1 unterschiedliche Zählerstände auf, z.B. wie in der Zeichnung dargestellt ZMS1 = 38 und ZBS1 = 20, d.h. der Fall Ungleichheit der veränderbaren Daten, so fordert die Funkvermittlungsstelle BS die beweglichen Funkstation MS mittels eines Identifizierungsbefehls zur Abgabe einer weiteren Identifizierung, bestehend beispielsweise aus den festen Daten mid5 und/oder Kennung K5 und des gesamten Zählerstandes (veränderbare Daten) auf. Die Funkvermittlungsstelle BS vergleicht die empfangenen festen Daten (mid5 und/oder Kennung K5) mit den im Speicher SP gespeicherten festen Daten.

Stimmen die festen Daten nicht überein, so wird von der zentralen Steuerungen STBS ein Alarm ausgelöst.

Stimmen die festen Daten überein, so wird von der zentralen Steuerung STBS der Zähler ZBS1 auf den Zählerstand des Zählers ZMS1 der beweglichen Funkstation MS gesetzt. Bei jedem nachfolgenden und erfolgreichen Zugriff erhöhen sich beide Zählerstände um eins. In der Funkvermittlungsstelle BS werden die von der beweglichen Funkstation MS angewählten Teilnehmernummern und der jeweilige Zählerstand gespeichert. Stimmen bei den nachfolgenden Zugriffen die Zählerstände überein, so wird die Speicherung der von der beweglichen Funkstation MS angewählten Teilnehmernummern wieder aufgehoben.

Falls auch alle nachfolgenden Vergleiche zu einem negativen Ergebnis führen, wird kein Verbindungsaufbau für die bewegliche Funkstation MS durchgeführt.Mittels der vorher vom Manipulanten angewählten Teilnehmernummern kann nun durch Nachfragen bei diesen Teilnehmern, der Name und somit der Manipulant ausfindig gemacht werden. Liegt ein Fehler in der beweglichen Funkstation MS vor, so kann dieser behoben werden.

Zur Vereinfachung des Auswertevorgangs der Zählerstände ZMS1 und ZBS1 kann zum Vergleich nur ein Teil des binär codierten Zählerstandes herangezogen werden. Zum Setzen des Zählers ZBS1 auf den Zählerstand des Zählers ZMS1 wird die bewegliche Funkstation MS von der Funkvermittlungsstelle BS zur Ausgabe des gesamten Zählerstandes aufgefordert. Dadurch kann erreicht werden, daß im Regelfall die Meldungslänge kurz ist und die Übertragungskapazität des Dienstkanals für eine Vielzahl von beweglichen Funkstationen MS voll ausgenützt wird.

Für eine Anzahl M von beweglichen Funkstationen MS ist in der Funkvermittlungsstelle BS ein Zähler ZBSx (x = 1, ..., M) vorgesehen. In der Zeichnung ist dies für eine zweite bewegliche Funkstation MS durch einen Zähler ZBS2 angedeutet.

Die Beschaffung von Identifizierungen und deren Zuordnung zu einer beweglichen Funkstation MS wird weiterhin dadurch erschwert, daß jeder beweglichen Funkstation MS neben den veränderbaren Daten feste, vom Systemablauf abhängige Daten zugeordnet werden. Der Manipulant muß über einen langen Zeitraum hinweg den Informationsaustausch auf dem Funkübertragungskanal abhören, um die verschiedenen der beweglichen Funkstation MS zugeordneten festen Daten überhaupt aufzeichnen zu können.

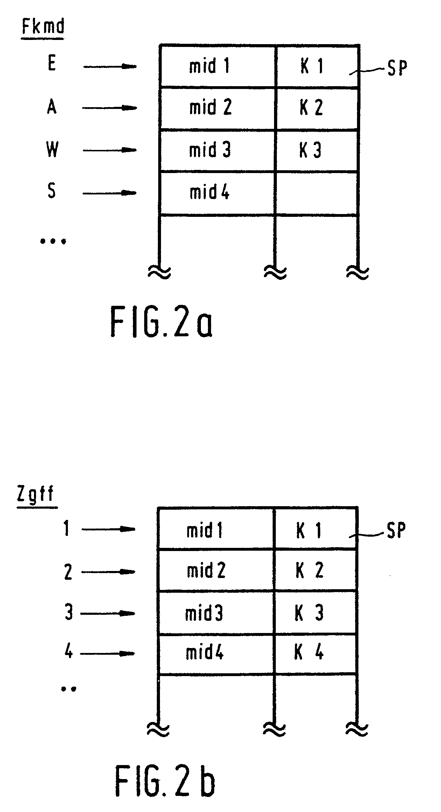

Für die Systemabläufe gibt es nur eine bestimmte Anzahl von verschiedenen Funkmeldungen, von denen in Fig. 2a beispielsweise die Funkmeldungen, "Einbuchen", "Ausbuchen", ... dargestellt sind. Im Hinblick auf eine Beschränkung der Datenmenge von festen Daten kann die Zahl der verschiedenen, der beweglichen Funkstation MS zugeordneten festen Daten gleich der Zahl von verschiedenen Funkmeldungen gewählt werden.

Die Zuordnung zwischen Funkmeldung und festen Daten, kann wie in Fig. 2a dargestellt, fest sein. Beispielsweise erfolgt das Einbuchen oder Ausbuchen der beweglichen Funkstation MS in Heimat- und Fremddateien der Funkvermittlungsstellen BS dann, wenn die bei den jeweiligen Funkmeldungen "Einbuchen" oder "Ausbuchen" als Bestandteil der Identi fizierung übertragenen festen Daten "mid1, K1" oder "mid2, K2" mit den in der Datei D der Funkvermittlungsstelle BS gespeicherten festen Daten übereinstimmen.

Um die Zuordnung von Funkmeldung und festen Daten variabel zu gestalten, insbesondere um die Zuordnung zeitabhängig zu gestalten, kann, wie in Fig. 2b dargestellt, nach jedem erfolgreichen Zugriff ein Zugriff mit anderen festen Daten erfolgen. Um die Festlegung von Zuordnungsvorschrift zu vereinfachen, kann vereinbart werden, daß der erste Zugriff der beweglichen Funkstation MS auf den Funkübertragungskanal, in der Regel die Funkmeldung "Einbuchen", mit ersten festen Daten, bestehend aus erster Teilnehmernummer mid1 und erster Kennung K1, erfolgt. Der zweite Zugriff der beweglichen Funkstation MS während eines Systemablaufs, beispielsweise zum "Ausbuchen" oder "Wahlstart", erfolgt dann mit einer zweiten Teilnehmernummer mid2 und zweiten Kennung K2. Da ein Manipulant nicht weiß der wievielte Zugriff der beweglichen Funkstation MS vorliegt, ist eine Zuordnung der festen Daten kaum möglich. Das versuchsweise Senden von Identifizierungen mit zufällig festgelegten festen Daten führt in der Regel zu einer Alarmmeldung in der Funkvermittlungsstelle BS und zum Speichern der vom Manipulanten angewählten Teilnehmernummern, so daß durch Rückfrage bei diesen Teilnehmern der Manipulant auf einfache Art und Weise ausfindig gemacht werden kann.

**Ansprüche**

1. Verfahren zum Erkennen der unerlaubten Benutzung einer, einer beweglichen Funkstation zugeordneten Identifizierung in einem Funkübertragungssystem, bei dem beim Zugriff der beweglichen Funkstation auf einen Nachrichtenübertragungskanal dieser zugeordnete feste Daten (Teilnehmernummer, Kennung der beweglichen Funkstation) mit in einer festen Funkstation, insbesondere einer Funkvermittlungsstelle, verfügbaren festen Daten verglichen werden, dadurch gekennzeichnet, daß in der beweglichen Funkstation (MS) und der Funkvermittlungsstelle (BS) zusätzliche und beim Betrieb der beweglichen Funkstation (MS) sich verändernde Daten vorhanden sind, daß beim Zugriff die bewegliche Funkstation (MS) eine Identifizierung, bestehend aus festen, vom Systemablauf abhängigen Daten und aus veränderbaren Daten sendet und daß diese Identifizierung mit in der Funkvermittlungsstelle (BS) verfügbaren Daten verglichen wird.

2. Verfahren nach Anspruch 1, dadurch gekennzeichnet, daß im Falle der Ungleichheit der veränderbaren Daten die Funkvermittlungsstelle (BS) mittels einer Identifizierungsaufforderung die bewegliche Funkstation (MS) zur Abgabe von anderen, in der beweglichen Funkstation (MS) gespeicherten festen Daten auffordert und mit den in der Funkvermittlungsstelle (BS) ebenfalls gespeicherten anderen festen Daten vergleicht und daß bei nachfolgenden Zugriffen in der Funkvermittlungsstelle (BS) überprüft wird, ob die weiteren veränderbaren Daten miteinander übereinstimmen.

3. Verfahren nach Anspruch 1, dadurch gekennzeichnet, daß in der Funkvermittlungsstelle (BS) neben den veränderbaren Daten auch die von der beweglichen Funkstation (MS) angewählten Teilnehmernummern gespeichert werden und daß bei wiederholtem Auftreten der Ungleichheit der veränderbaren Daten kein Verbindungsaufbau mehr für diese bewegliche Funkstation (MS) durchgeführt wird.

4. Verfahren nach Anspruch 1, dadurch gekennzeichnet, daß als veränderbare Daten die Zahl von erfolgreichen Zugriffen der beweglichen Funkstation (MS) auf einen Funkübertragungskanal verwendet werden und daß ein in der beweglichen Funkstation (MS) und ein in der ortsfesten Funkstation (BS) angeordneter und dieser beweglichen Funkstation (MS) zugeordneter Zähler (ZMS1, ZBS1) im Zählerstand bei jedem erfolgreichen Zugriff erhöht werden.

5. Verfahren nach Anspruch 4, dadurch gekennzeichnet, daß als veränderbare Daten bei einem Zugriff nur ein Teil des Zählerstands, von der beweglichen Funkstation (MS) gesendet wird.

6. Verfahren nach Anspruch 2 und 4, dadurch gekennzeichnet, daß zusammen mit den anderen festen Daten der gesamte Zählerstand des Zählers (ZMS1) der beweglichen Funkstation (MS) zur Funkvermittlungsstelle (BS) übertragen wird und der dort befindliche Zähler (ZBS1) auf diesen Zählerstand gesetzt wird.

7. Verfahren nach Anspruch 2, dadurch gekennzeichnet, daß die Identifizierungsaufforderung der Funkvermittlungsstelle (BS) nur aus einer zweiten Teilnehmernummer (mid 2) besteht.

8. Verfahren nach Anspruch 1, dadurch gekennzeichnet, daß in der beweglichen Funkstation (MS) feste und veränderbare Daten auf einer Magnetkarte gespeichert werden.

9. Verfahren nach Anspruch 4, dadurch gekennzeichnet, daß als veränderbare Daten bei einem Zugriff nur ein Teil des Zählerstandes gesendet werden, indem einzelne Bitstellen des Zählerstandes ausgewählt werden oder der Zählerstand mit einem Schlüssel verknüpft (beispielsweise EXOR-Verknüpfung) wird.

10. Verfahren nach Anspruch 2, dadurch gekennzeichnet, daß als zweite feste Daten eine Kennung der beweglichen Funkstation (MS) verwendet wird.

11. Verfahren nach Anspruch 1, dadurch gekennzeichnet, daß die Zahl von verschiedenen jeder beweglichen Funkstation (MS) zugeordneten festen Daten höchstens gleich der Zahl aller verschiedenen Funkmeldungen ist.

12. Verfahren nach Anspruch 11, dadurch gekennzeichnet, daß die Zuordnung zwischen Funkmeldung und festen Daten fest ist.

13. Verfahren nach Anspruch 11, dadurch gekennzeichnet, daß die Zuordnung zwischen Funkmeldung und festen Daten variabel ist, indem nach jedem erfolgreichen Zugriff eine andere Zuordnung verwendet wird.

14. Verfahren nach Anspruch 11 oder 13, dadurch gekennzeichnet, daß die Zuordnung zwischen Funkmeldung und festen Daten abhängig ist von der Zahl der erfolgreichen Zugriffe, daß nach dem Einschalten der beweglichen Funkstation (MS) der Zugriff "Einbuchen" mit ersten festen Daten (mid1, K1) und daß nach jedem erfolgreichen Zugriff ein Zugreifen der beweglichen Funkstation (MS) auf den Funkübertragungskanal mit anderen festen Daten (z.B. mid2, K2) erfolgt.

**Claims**

1. A method of detecting the unauthorized use of an identification code assigned to a mobile radio station in a radio transmission system, in which, when the mobile radio station accesses a message transmission channel, fixed data (subscriber number, identification code of the mobile radio station) assigned to this mobile radio station are compared in a stationary radio station, more specifically a radio exchange, with available fixed data, characterized in that in the mobile radio station (MS) and the radio exchange (BS) additional and during operation of the mobile radio station (MS) variable data are available, in that during the access the mobile radio station (MS) transmits an identification code, formed by fixed data depending on the system procedures, and variable data and in that this identification code is compared with data available in the radio exchange (BS).

2. A method as claimed in Claim 1, characterized in that when there is inequality between the variable data, the radio exchange (BS) asks by means of an identification request the mobile radio station (MS) to supply further fixed data stored in the mobile radio station (MS) and compares them with other fixed data also stored in the radio exchange (BS) and in that at subsequent accesses it is checked in the radio exchange (BS) whether the further variable data are in agreement.

3. A method as claimed in Claim 1, characterized in that in addition to the variable data also the subscriber numbers selected by the mobile radio station (MS) are stored in the radio exchange (BS), and in that when 1 there is repeatedly inequality between the variable data, a connection is no longer established for this mobile radio station (MS).

4. A method as claimed in Claim 1, characterized in that as variable data the number of successful accesses of the mobile radio station (MS) to a radio transmission channel are used and that the counts of counters (ZMS1, ZBS1) one of which is provided in the mobile radio station (MS) and the other in the stationary radio station (BS), these counters being assigned to this mobile radio station (MS), are increased at each successful access.

5. A method as claimed in Claim 4, characterized in that only a portion of the count is transmitted by the mobile radio station (MS) as variable data in the case of access to a transmission channel.

6. A method as claimed in Claims 2 and 4, characterized in that together with the other fixed data the total count of the counter (ZMS 1) of the mobile radio station (MS) is transmitted to the radio exchange (BS) and in that the counter (ZBS1) arranged in said radio exchange is set to this count.

7. A method as claimed in Claim 2, characterized in that the request for identification by the radio exchange (BS) only consists of a second subscriber number (mid2).

8. A method as claimed in Claim 1, characterized in that in the mobile radio station (MS) fixed and variable data are stored on a magnetic card.

9. A method as claimed in Claim 4, characterized in that in the case of access only a portion of the count is transmitted as variable data, whilst individual bit positions of the count are selected or the count is subjected to combination with a key (for example an EXOR-combination).

10. A method as claimed in Claim 2, characterized in that an identification code of the mobile radio station (MS) is used as the second fixed data.

11. A method as claimed in Claim 1, characterized in that the number of fixed data assigned to each mobile radio station (MS) does not exceed the number of all the different radio messages.

**12.** A method as claimed in Claim 11, characterized in that the number of assigned fixed data and radio messages is fixed.

**13.** A method as claimed in Claim 11, characterized in that the number of assigned fixed data and radio messages is variable, whilst a different assignment is used after each successful access.

**14.** A method as claimed in Claim 11 or 13, characterized in that the number of assigned fixed data and radio messages depends on the number of successful accesses, in that after the mobile radio station (MS) has been switched on, the message "enter into store" is given with first fixed data (mid1, K1) and in that after each successful access the mobile radio station (MS) accesses the radio transmission channel using different fixed data (for example mid2, K2).

**Revendications**

**1.** Procédé pour reconnaître l'utilisation abusive d'une identification attribuée à un mobilophone dans un système de radiotéléphonie suivant lequel, lors d'un accès du mobilophone à un canal de transmission d'informations, des données fixes qui y sont associées (numéro d'abonné, indicatif du mobilophone) sont comparées à des données fixes disponibles dans une station radio fixe en particulier un central radiotéléphonique, caractérisé en ce que des données supplémentaires qui varient pendant le fonctionnement du mobilophone (MS) sont disponibles dans le mobilophone (MS) et dans le central radiotéléphonique (BS), que, lors d'un accès, le mobilophone (MS) émet une identification qui est constituée de données fixes dépendant de la séquence du système et de données variables et que cette identification est comparée à des données disponibles dans le central radiotéléphonique (BS).

**2.** Procédé suivant la revendication 1, caractérisé en ce que, dans le cas où les données variables ne sont pas identiques, le central radiotéléphonique (BS) demande, par une requête d'identification, au mobilophone (MS) de lui fournir d'autres données fixes qu'il possède à l'état stocké et il les compare à d'autres données fixes qu'il possède lui-même à l'état stocké et que, lors d'accès ultérieurs, il est vérifié dans le central radio téléphonique (BS) si les autres données variables concordent les unes avec les autres.

**3.** Procédé suivant la revendication 1, caractérisé en ce que, dans le central radiotéléphonique (BS), sont stockés, outre les données variables, également les numéros d'abonnés sélectionnés par le mobilophone (MS) et que, si la non-identité des données variables se répète, aucune liaison n'est plus établie pour ce mobilophone (MS).

**4.** Procédé suivant la revendication 1, caractérisé en ce que le nombre d'accès couronnés de succès du mobilophone (MS) à un canal radiotéléphonique est utilisé à titre de données variables et, qu'à chaque accès couronné de succès, les comptes d'un compteur (ZMS1) installé dans le mobilophone (MS) et d'un compteur (ZBS1) installé dans la station radio fixe (BS) et attribués audit mobilophone (MS) sont incrémentés.

**5.** Procédé suivant la revendication 4, caractérisé en ce que lors d'un accès, une partie seulement du compte du compteur du mobilophone (MS) est émise à titre de données variables.

**6.** Procédé suivant les revendications 2 et 4, caractérisé en ce que conjointement avec les autres données fixes, le compte complet du compteur (ZMS1) du mobilophone (MS) est transmis au central radiotéléphonique (BS), tandis que le compteur (ZBS1) se trouvant à cet endroit est réglé sur ledit compte.

**7.** Procédé suivant la revendication 2, caractérisé en ce que la requête d'identification du central radiotéléphonique (BS) est constituée simplement d'un deuxième numéro d'abonné (mid2).

**8.** Procédé suivant la revendication 1, caractérisé en ce que, dans le mobilophone (MS), des données fixes et des données variables sont stockées sur une carte magnétique.

**9.** Procédé suivant la revendication 4, caractérisé en ce que, lors d'un accès, une partie seulement du compte est émise, à titre de données variables, par le fait que certaines positions de bits du compte sont sélectionnées ou que le compte est soumis à une combinaison codée (par exemple une combinaison OU-EXCLUSIF).

**10.** Procédé suivant la revendication 2, caractérisé en ce qu'un indicatif du mobilophone (MS) est utilisé à titre de deuxième donnée fixe.

11. Procédé suivant la revendication 1, caractérisé en ce que le nombre de données fixes différentes attribuées à chaque mobilophone (MS) est au maximum égal au nombre total d'annonces radio différentes.

12. Procédé suivant la revendication 11, caractérisé en ce que l'association entre annonce radio et données fixes est fixe.

13. Procédé suivant la revendication 11, caractérisé en ce que l'association entre annonce radio et données fixes est variable, par le fait qu'après chaque accès couronné de succès, une association différente est utilisée.

14. Procédé suivant la revendication 11 ou 13, caractérisé en ce que l'association entre annonce radio et données fixes dépend du nombre d'accès couronnés de succès, qu'après l'enclenchement du mobilophone (MS), l'accès "inscrire" est réalisé avec des premières données fixes (mid1, K1) et qu'après chaque accès couronné de succès, un accès du mobilophone (MS) au canal radiotéléphonique est réalisé avec d'autres données fixes (par exemple mid2, K2).

FIG.1

mid 1 = 12  4  2  2
K 1   = 10
K 2   = 14

ZMS1 = 38

mid 1 = 12  4  2  2
K 1   = 10
K 2   = 14

ZBS1 = 20

EP 0 163 358 B1

Fkmd

| | | |
|---|---|---|
| E → | mid 1 | K 1 |
| A → | mid 2 | K 2 |
| W → | mid 3 | K 3 |
| S → | mid 4 | |

— SP

...

# FIG. 2a

Zgff

| | | |
|---|---|---|
| 1 → | mid 1 | K 1 |
| 2 → | mid 2 | K 2 |
| 3 → | mid 3 | K 3 |
| 4 → | mid 4 | K 4 |

— SP

..

# FIG. 2 b